# EUROPEAN PATENT SPECIFICATION

(11) **EP 2 266 155 B1**
(45) Date of publication and mention of the grant of the patent: **07.05.2014**
(21) Application number: 09718106.9
(22) Date of filing: 06.03.2009
(51) Int. Cl.: H01M 4/04, H01M 4/139, H01M 4/62

(54) **PROCESS FOR MAKING ELECTRODES FOR LITHIUM BASED ELECTROCHEMICAL CELLS**
PROZESS ZUR HERSTELLUNG VON ELEKTRODEN FÜR AUF LITHIUM BASIERENDE ELEKTROCHEMISCHE ZELLEN
PROCÉDÉ DE FABRICATION D'ÉLECTRODES POUR PILES ÉLECTROCHIMIQUES À BASE DE LITHIUM

(30) Priority: 07.03.2008 US 44612
(43) Date of publication of application: 29.12.2010
(73) Proprietor: Bathium Canada Inc., Boucherville, QC J4B 7Z7 (CA)
(72) Inventor: LEBLANC, Patrick, Boucherville Quebec J4B 8K5 (CA); COTTON, Frederic, Montreal Quebec H2A 3K5 (CA); LESSARD, Dave, Candiac Québec J5R 6R6 (CA); VALLEE, Alain, Varennes Quebec J3X 2A2 (CA)
(74) Representative: Oudin, Stéphane
(86) International application number: PCT/CA2009/000294
(87) International publication number: WO 2009/109053

(56) References cited:
- JP-A- 2006 244 801
- JP-A- 2006 294 457
- JP-A- 2007 214 027
- US-A- 3 917 769
- US-A1- 2003 215 710
- US-A1- 2004 101 752
- US-A1- 2006 166 093
- US-A1- 2007 273 062
- US-A1- 2008 038 635

## Description

### FIELD OF THE INVENTION

The present invention relates to a process for making electrodes for lithium based electrochemical cells.

### BACKGROUND OF THE INVENTION

Processes for making thin sheets of positive electrodes for lithium ion type electrochemical cells typically consist of mixing active electrode material which is usually in powder form with an electrically conductive material such as carbon or graphite particles and a polymer binder into an organic solvent which is then blended into a homogenized electrode slurry. The electrode slurry is thereafter coated on a current collector sheet in the form of a thin layer or film and the organic solvent is removed from the thin film by heating the thin film to evaporate the solvent. The resulting dried positive electrode thin sheet is typically porous and contains no electrolyte. The dried positive electrode thin sheet is assembled with a separator and a counterpart negative electrode and the assembly is saturated with an ionically conductive liquid electrolyte comprising a lithium salt dissolved therein to form a lithium ion electrochemical cell. The porous positive electrode is filled with the electrolyte to ensure the ionic exchange between the positive and negative electrodes.

When producing large batches or in a continuous process, the large quantity of evaporated solvent which may exceed environmental guide lines may have to be recovered to avoid environmental contamination and the recovery process requires special installations to prevent the solvent in gaseous form from escaping into the environment, and specialty equipments for handling and storing the used solvent which must then be disposed of, or reused.

Other coating processes for making thin sheets of positive electrode material for solid type lithium based electrochemical cells incorporate into the electrode mixture an electrolyte consisting of a lithium salt solvating polymer and a lithium salt which acts as a binder as well as an electrolyte. The mixture of positive electrode which comprises an active electrode material, an electrically conductive material, a solvating polymer and a lithium salt is blended together with an organic solvent into a homogenized electrode slurry. The electrode slurry is thereafter coated on a current collector sheet in the form of a thin layer or film and the organic solvent is removed from the thin film by heating the thin film to evaporate the solvent. The positive electrode thin sheet thereby produced has little porosity since the electrolyte is already in the electrode and fills the space between the active electrode particles. The positive electrode thin sheet is then assembled with a solid ionically conductive electrolyte sheet consisting of the same or a different polymer and the lithium salt and a counterpart negative electrode to form a lithium based electrochemical cell.

In both cases, the amount of organic solvents is adjusted for diluting the electrode mixture sufficiently in order to lower its viscosity such that the electrode mixture can be spread into thin layers. In both cases, the organic solvents must be removed prior to assembly with the electrolyte separator and the negative electrode to form an electrochemical cell. When producing in large batches or in a continuous process, the organic solvent may have to be recovered and/or treated to avoid discharge into the environment in gaseous form.

US patent application US2006/0166093 discloses a process of making positive and/or negative electrode material in which the processing solvent is water. The disclosed process utilizes a so-called water soluble synthetic rubber (SBR) mixed with a thickening agent as the electrode binder. An aqueous solution adapted for spreading is prepared which include an electrochemically active material, a water soluble synthetic rubber, a thickening agent, optionally an electronically conductive material, and water as the solvent. The aqueous solution of electrode material does not contain lithium salt as the latter is known for its hygroscopic properties which would make it very difficult to dry the electrode after it has been spread into film form in order to remove the water. The film is dried for an extensive period of time (12-24 hours) to reduce the water contain to below 2000ppm and most preferably below 50ppm. The electrode sheet produced is porous in order to allow infiltration of a liquid or gelled electrolyte including a lithium salt to provide an ionically conductive path to the particles of electrochemically active material in the electrode. The process disclosed for making an electrode is therefore a two-step process in which the constituents of the electrode excluding the electrolyte are first mixed in water and dried and when the basic electrode is dried, the electrolyte including lithium salt is added to form a working electrode. The process disclosed is therefore specific to lithium ion type electrochemical cells and is not adapted for production of lithium based electrochemical cells having a solid electrolyte which requires that the lithium salt be incorporated in the positive electrode prior to assembly into electrochemical cells.

Thus, there is a need for a method and a process for making electrodes incorporating its ionically conductive electrolyte for lithium based electrochemical cells which is cost effective and environmentally friendly.

### STATEMENT OF THE INVENTION

One aspect of the present invention is to provide a process for making an electrode sheet for a lithium based electrochemical cells comprising the steps of : a) admixing a polyether polymer or copolymer soluble in water, at least one lithium salt, at least one electrochemically active material water and one or more organic solvent miscible with water in a water/organic solvent ratio of a maximum of 50% organic solvent by volume to form a water-based solution/suspension containing by weight, at least 40% of water/organic solvent mix at least 20% electrochemically active material, at least 5% of a polyether polymer or copolymer, and at least 1.5% lithium salt; b) coating the water-based solution/suspension in the form of an electrode thin film onto an electrode support; and, c) drying the electrode thin film to obtain an electrode thin sheet having less than 1000ppm of residual water.

Another aspect of the present invention provides that the electrode thin sheet has less than 10 % porosity after being dried.

Another aspect of the present invention provides admixing up to 10% by weight electrically conductive material into the water-based solution/suspension.

Another aspect of the present invention provides that the water-based solution/suspension contains water and one or more organic solvent miscible with water, the organic solvent being at a maximum of 25% by volume.

An additional aspect of the invention provides that the organic solvent is selected from the group consisting of an alcohol, a mixture of alcohols, a ketone, a mixture of ketones, a mixture of alcohol and ketone and a mixture of alcohols and ketones.

Another aspect of the present invention provides admixing an antifoaming agent into the water-based solution/suspension.

An additional aspect of the invention provides admixing an electrically conductive material into the water-based solution/suspension.

Another aspect of the present invention provides that the electrode thin film is dried by thermal convection, thermal conduction and/or thermal radiation drying process carried out through multiple incremental temperature stages.

An additional aspect of the invention provides the electrode thin film travels through a dryer/oven consisting of a tunnel having incremental temperature zones ranging from 50°C to 200°C.

A further aspect of the present invention provides that the drying step is carried out under a nitrogen gas sweep at the surface of the electrode thin film.

An additional aspect of the invention provides that the polyether polymer or copolymer is capable of solvating a lithium salt.

An additional aspect of the invention provides that the polyether polymer or copolymer is cross-linkable.

Embodiments of the present invention each have at least one of the above-mentioned objects and/or aspects, but do not necessarily have all of them. It should be understood that some aspects of the present invention that have resulted from attempting to attain the above-mentioned objects may not satisfy these objects and/or may satisfy other objects not specifically recited herein.

Additional and/or alternative features, aspects and advantages of the embodiments of the present invention will become apparent from the following description, the accompanying drawings and the appended claims.

### BRIEF DESCRIPTION OF THE DRAWINGS

For a better understanding of the present invention as well as other aspects and further features thereof, reference is made to the following description which is to be used in conjunction with the accompanying drawings, where:
FIG. 1 is a flowchart illustrating a process method for preparing a thin film electrode for use in a lithium based electrochemical cell in accordance with one embodiment of the present invention;
FIG. 2 is a flowchart illustrating a process method for preparing a thin film electrode for use in a lithium based electrochemical cell in accordance with a second embodiment of the present invention;
FIG. 3 is a flowchart illustrating a process method for preparing a thin film electrode for use in a lithium based electrochemical cell in accordance with a third embodiment of the present invention;
FIG. 4 is a flowchart illustrating a process method for preparing a thin film electrode for use in a lithium based electrochemical cell in accordance with a fourth embodiment of the present invention;
FIG. 5 is a flowchart illustrating a process method for preparing a thin film electrode for use in a lithium based electrochemical cell in accordance with a fifth embodiment of the present invention; and
FIG. 6 is a flowchart illustrating a process method for preparing a thin film electrode for use in a lithium based electrochemical cell in accordance with a sixth embodiment of the present invention.

### DESCRIPTION OF PREFERRED EMBODIMENT(S)

All lithium salts are generally acknowledged as hygroscopic materials having the ability to attract and bind water molecules. Contemplating the use of water as the solvent to mix the constituent elements of an electrode which includes the electrolyte (with a lithium salt) is considered by the electrochemical scientific community as ill advised because of the hygroscopic nature of lithium salts and the difficulties it raises in extracting all traces of water once the electrode has been spread onto a substrate in the form of a thin film considering that small amounts of residual water in the thin sheet of electrode will drastically affect the capacity of the electrochemical cell as well as its ability to cycle.

As will be described in details further down, one embodiment of the process involves dissolving a lithium salt into water. Lithium salts such as LiTFSI, TFSI, FSI, BETI, LiBOB, LiBF₄, and LiClO₄ can be used in the present process using water as a solvent. Lithium salts, like most salts are generally acknowledged as hygroscopic materials having the ability to attract and hold water molecules. The use of water as the solvent to mix the constituent elements of an electrode which includes lithium salts for producing electrode thin sheets raises the difficulty of extracting all traces of water once the electrode has been spread onto a substrate in the form of a film. Indeed, Lithium salts have a tendency to bind with water molecules and to form hydrated salt molecules. The water molecules are therefore difficult to remove once these hydrated salt molecules are formed and as previously mentioned, even small amounts of water molecules left in the electrode material will drastically affect the overall capacity of the electrochemical cells being manufactured as well as their ability to cycle.

However, the inventors have unexpectedly discovered that lithium salts and particularly LiTFSI can be processed, along with the other constituents of an electrode, in water and that the water molecules can be extracted from the electrode at the end of the process. Distilled, purified or deionised water is preferably used to avoid contamination.

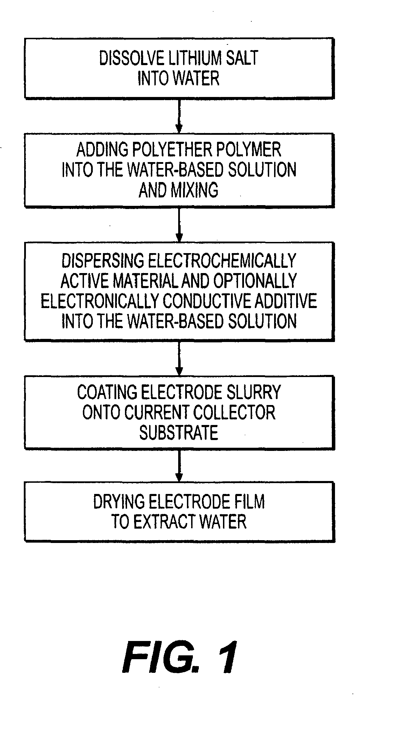

FIG. 1 is a flowchart illustrating a process for preparing an electrode sheet in accordance with one embodiment of the present invention. First, a lithium salt such as LiTFSI is dissolved into water at a proper ratio for a desired composition. The lithium salt is dissolved in water using a standard mechanical mixer to ensure complete dissolution of the lithium salt in the water. The amount of water is as much as necessary to dissolve the lithium salt completely. Since the water is evaporated at the end of the process, there is no restriction on the amount of water used however, for economical reason related to the efficiency of the drying process, it is better to reduce the amount of water used to the minimum. The amount of water used should be enough to dissolve the lithium salt and the solvating polyether polymer or copolymer added to the solution of water- lithium salt in the subsequent step of the process. Also, the amount of water should be in a range that insures a good rheological behaviour to the water-based solution/suspension after the addition of the electrochemically active material and the electrically conductive material in order to form a paste that will be readily spread in the form of a thin film.

Subsequently, a polyether polymer or copolymer capable of solvating the lithium salt, preferably a polyethylene oxide polymer or co-polymer is introduced into the water-based solution including the lithium salt. Polyethylene oxide is one example of a polyether polymer capable of solvating a lithium salt such that when water is removed at the end of the process, the polyethylene oxide matrix with the lithium salt dissolved therein serves as the electrolyte component of the electrode as well as its binder. Once dried, the solid electrolyte serves as binder for the materials of the electrode and ensures ionic transport through the electrode. The new interim water-based solution including the lithium salt and polyethylene oxide is mechanically mixed until a homogeneous water-based solution is obtained.

The polyether polymer may be cross-linkable. The use of a cross-linkable polyether polymer enables to utilize a polymer of lower molecular weight, which facilitates the mixing and blending of the electrode components and increase the mechanical properties of the electrode. The polymer matrix may also contain at least one cross-linking additive in order to increase the dimensional stability of the formed electrode. The cross-linking additive is selected from trimethylolpropane, trimethacrylate, polyethylene oxide diacrylate, polyethylene oxide dimethacrylate, glycerol triacrylate, glycerol trimethacrylate, pentaerythiol tetraacrylate, glycerol propoxylate (1PO/OH) triacrylate, dipentaerythiol penta/hexaacrylate and di(trimethylolpropane) tetraacrylate. The matrix may also contain a cross-linking initiator. Cross-linking of the polymer matrix is carried out thermally, by UV radiation or with an electron beam (EB).

An antifoaming agent (silicone based or non-silicone based) may be added to the water-based solution either before or after the introduction of the polyethylene oxide in order to prevent foam build-up at the surface of the water-based solution or gas bubbles formation in the bulk of the water-based solution during mixing. The antifoaming agent is preferably selected from the group consisting of: polydimethylsiloxane, 10% to 100% Silicone Antifoam compound, Acidified Silicone Antifoam, Non-silicone Antifoam Emulsion, Co-Polymer Defoamer, Fatty Alcohol Defoamer, Vegetable Oil-Based Defoamer, 2-ethylhexanol (EH), tributyl phosphate (TBP), and tetrabutylammonium chloride (TBAC).

As an additional or alternative measure to prevent foaming, the mixing process may be carried out under vacuum in order to limit air contact with the water-based solution during mixing thereby preventing or limiting foam build-up at the surface of the water-based solution or gas bubbles formation in the bulk of the aqueous solution during mixing.

Thereafter, the electrochemically active material and, if required an electronically conductive additive, is introduced into the water-based solution including the lithium salt and the polyethylene oxide and the new mixture is mechanically mixed under vacuum until a homogeneous degassed water-based solution/suspension in the form of a slurry is obtained. The electrochemically active material is generally in the form of powders and is preferably selected from electrochemically active materials having the general formulas of LiFePO4, LiCoO₂, LiNiO₂, LiMn₂O₄, and Li₄Ti₅O₁₂, and all their derivatives. All these electrochemically active materials may of course have a nanometric structure.

The electronically conductive additive is typically selected from the group consisting of carbon, carbon black, graphite and cokes. Electronically conductive additive may not be required when the electrochemically active material used in the electrode exhibits sufficient electronic surface conductivity. However, even then, electronically conductive additive may be added depending on the end product (electrochemical cell) cycling requirements.

In general terms, the water-based solution/suspension contains by weight at least 40% water, at least 20% electrochemically active material, up to 10% electrically conductive material if required, at least 5 % polyethylene oxide polymer or copolymer, and at least 1.5% lithium salt.

After mixing (under vacuum and/or with antifoaming agent added), a homogeneous slurry is obtained which is ready to be formed into a thin film. The homogeneous slurry is preferably spread or coated directly onto a current collector substrate. An aluminium based current collector substrate is typically used for the positive electrode and a copper based current collector substrate is typically used for the negative electrode. The spreading or coating of the homogeneous slurry is preferably carried out via Doctor blade, reverse roll, gravure roll, curtain, slide die, or slot die processes. The slurry may also be heated prior to coating to reduce its viscosity. The coated electrode thin film preferably has a thickness of less than 100*µ*m and preferably less than 70 *µ*m.

Thereafter, the current collector substrate coated with the electrode slurry is passed through a dryer/oven in order to remove the water from the coated electrode slurry to form the electrode thin sheet having less than 1000ppm of residual water. Preferably, the dryer/oven consists of floatation tunnel having incremental drying zones each in which a heated gas set at a specific temperature and flow rate dries the electrode thin film. As it travels through the dryer/oven tunnel, the current collector substrate coated with the electrode thin film is suspended in mid air by the moving heated gases such that it is said to float. Water is removed from the electrode thin film by thermal convection, conduction and/or radiation. For example, the dryer/oven tunnel includes five (5) drying zones. In each drying zone, the temperature and velocity of the heated gas is specifically set to remove the maximum amount of water left in the electrode thin film without affecting the surface quality of the electrode thin film; each one of these zones removing more and more water until the electrode thin film is dry and substantially all traces of water have been removed such that the final electrode thin sheet contains less than 1000ppm of water and more preferably less than 600ppm of water. The temperature and the velocity of the impingement gas of each zone are set to optimise the drying process at a given speed of the film through the dryer/oven tunnel and to insure a good quality of the electrode surface. There may be more or less drying zones in the dryer/oven tunnel depending on its length and the temperature steps desired.

As a further example, each of the drying zones may have the same heated gas velocity while the temperature of the heated gases increase in steps through each drying zones. The dryer/oven tunnel includes multiple temperature zones such that the current collector substrate coated with the thin film of electrode material goes through multiple stages of temperature ranging from 50°C to 200°C in a continuous process. Each one of these zones removing more and more water until the electrode thin film is dry and substantially all traces of water have been removed.

The length of the dryer/oven tunnel as well as the length of time the current collector and electrode assembly is heated through the various temperature/velocity stages of the dryer/oven tunnel is relative to the speed of the current collector and electrode assembly through the dryer/oven tunnel, the thickness of the film and the initial proportion of water in the electrode slurry.

The removal of the water present in the electrode film is also preferably carried out under a nitrogen gas sweep at the surface of the electrode in order to avoid formations of species through reactions of some constituent elements of the electrode with ambient air.

When the polyether polymer or copolymer used in the electrode is cross-linkable and/or contains a cross-linking additive, cross-linking of the polymer matrix occurs through the sequential heat stages of the drying process or in a subsequent process step.

Various techniques known to one skilled in the art can be used to remove the traces of water that are present in the electrode, after coating of the latter. These traces of water are removed by thermal means on line of the EXT, DBH and/or DB process, or by infra red at a temperature advantageously between 50°C and 200°C.

Because the electrode thin sheet produced by the above process contains all the constituent elements of a working electrode and more specifically the ionically conductive electrolyte consisting of the solvating polymer matrix containing the lithium salt, the resulting electrode thin sheet has less than 10 % porosity and preferably less than 5% after being dried and the water removed. The resulting electrode thin sheet is solid yet flexible and is an operational electrode.

The process described above therefore enables one to produce a working electrode using water as a solvent by mixing all the constituent elements including the ionically conductive electrolyte comprising a lithium salt prior to assembling the working electrode into an electrochemical cell as opposed to prior art processes in which the basic constituent elements of the electrode (excluding the ionically conductive electrolyte comprising lithium salt) are mixed, dried and assembled into an electrochemical cell and thereafter, an ionically conductive electrolyte comprising a lithium salt is introduced in the electrode to complete the formation of a working electrode and the electrochemical cell.

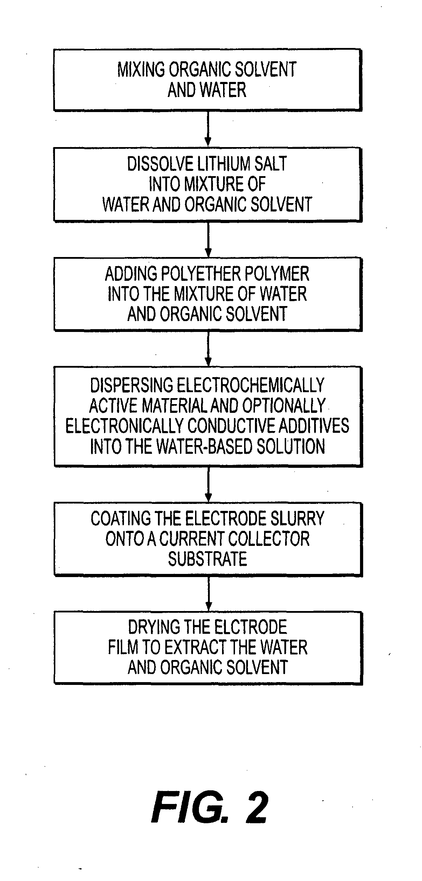

FIG. 2 is a flowchart illustrating a process for preparing an electrode thin sheet in accordance with a second embodiment of the present invention. First, an organic solvent miscible with water is mixed with water in a ratio of a maximum of 50% organic solvent by volume. Preferred organic solvents are alcohols, mixtures of alcohols, ketones, mixtures of ketones, mixtures of alcohol and ketone and mixtures of alcohols and ketones. Preferred alcohols are ethanol, methanol or isopropanol. Preferred ketones are acetone and methyl ethyl ketone (MEK).

In a preferred embodiment, the organic solvent is mixed with water in a ratio of between 5 % and 25 % of organic solvent with between 95 % and 75 % water by volume. The portion of organic solvent is added to water in order to increase the solubility of the polyether polymer or copolymer in the solvent mix (organic solvent and water) to be added in the third step of the process shown in FIG. 2. The organic solvent has the effect of increasing the Low Critical Solubility Temperature (LCST) of the polymer thereby improving the ease of mixing and processing the constituents of the electrode slurry.

Next, a lithium salt such as LiTFSI is dissolved into the solvent mix at a proper ratio for a desired composition. The lithium salt is dissolved in the solvent mix using a standard mechanical mixer to ensure complete dissolution of the lithium salt in the solvent mix. The amount of solvent mix is as much as necessary to dissolve the lithium salt completely. Since the solvent mix is evaporated at the end of the process, there is no restriction on the amount of solvent mix used however, for economical reason related to the efficiency of the drying process and to limit the amount of organic solvent evaporated to a minimum to avoid environmental contamination and the recovery process that it may entail, it is better to reduce the amount of solvent mix used to the minimum. The amount of solvent mix used should be enough to dissolve the lithium salt and disperse the polyether polymer added to the solution in the third step of the process. Also, the amount of solvent mix should be in a range that insures a good rheological behaviour to the aqueous solution/suspension after the addition of the electrochemically active material and the electrically conductive material in order to form a paste that will be readily spread in the form of a thin film.

Subsequently, a polyether polymer or copolymer capable of solvating a lithium salt, preferably a polyethylene oxide polymer or co-polymer is introduced into the water-based solution including the lithium salt. Polyethylene oxide is one example of a polyether polymer capable of solvating lithium salt such that when water and organic solvent are removed by evaporation, the polyethylene oxide matrix with the lithium salt dissolved therein serves as the electrolyte component of the electrode. Once dried, the solid electrolyte serves as binder for the materials of the electrode and ensures ionic transport through the electrode. The new interim water-based solution including the lithium salt and polyethylene oxide is mechanically mixed until a homogeneous water-based solution is obtained.

The polyether polymer may be cross-linkable. The use of a cross-linkable polyether polymer enables to utilize a polymer of lower molecular weight, which facilitates the mixing and blending of the electrode components. The polymer matrix may also contain at least one cross-linking additive in order to increase the dimensional stability of the formed electrode. The cross-linking additive is selected from the additives enumerated above relative to FIG. 1. Cross-linking of the polymer matrix is carried out thermally, by UV radiation or with an electron beam (EB).

To prevent foaming, an antifoaming agent (silicone based or non-silicone based) may be added as described above and the mixing process may be carried out under vacuum in order to limit air contact with the solution during mixing.

Thereafter, the electrochemically active material and, if required an electronically conductive additive, is introduced into the water-based solution now including the solvent mix, the lithium salt and the polyethylene oxide and the new mixture is mechanically mixed under vacuum until a homogeneous degassed final water-based solution/suspension in the form of a slurry is obtained. The electrochemically active materials used are described above with reference to Fig. 1.

In general terms, the electrode slurry mixture contains by weight at least 40% water-based solvent mix, at least 20% electrochemically active material, up to 10% electrically conductive material if required, at least 5 % polyether polymer or copolymer, and at least 1.5 % lithium salt.

After mixing (under vacuum and/or with antifoaming agent added), a homogeneous water-based solution/suspension slurry is obtained which is ready to be formed into a thin film. The homogeneous slurry is preferably spread or coated directly onto a current collector substrate. An aluminum based current collector substrate is typically used for the positive electrode and a copper based current collector substrate is typically used for the negative electrode. The spreading or coating of the homogeneous slurry is preferably carried out via Doctor Blade, reverse roll, gravure roll, curtain, slide die, or slot die processes. The slurry may also be heated prior to coating to reduce its viscosity. The coated electrode thin film preferably has a thickness of less than 100µm and preferably less than 70 *µ*m.

Thereafter, the current collector substrate coated with the electrode thin film is carried through a dryer/oven to remove the water and organic solvent from the coated electrode film as described relative to FIG.1 in order to form an electrode sheet.

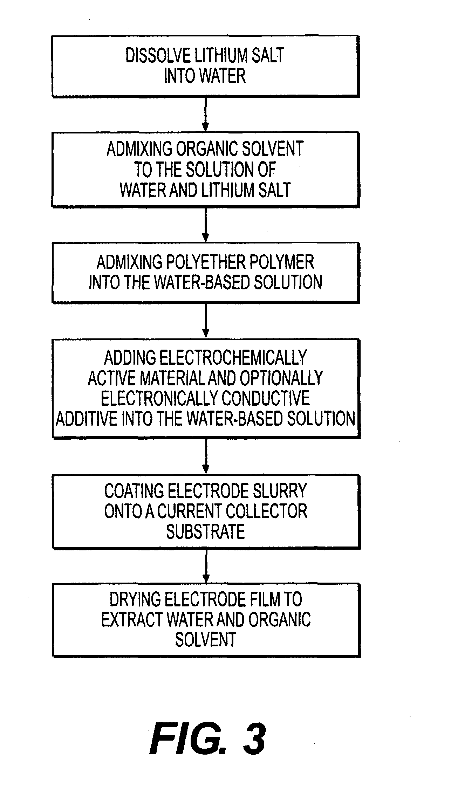

FIG. 3 is a flowchart illustrating a process for preparing an electrode thin sheet in accordance with a third embodiment of the present invention. First, a lithium salt is dissolved into water at a proper ratio for a desired composition. The lithium salt is dissolved in water using a standard mechanical mixer to ensure complete dissolution of the lithium salt in the water. The amount of water is as much as necessary to dissolve the lithium salt completely. Since the water is evaporated at the end of the process, there is no restriction on the amount of purified water used however, for economical reason related to the efficiency of the drying process, it is better to reduce the amount of water used to the minimum.

Subsequently, an organic solvent miscible with water is mixed with the solution of water and lithium salt in a ratio of a maximum of 50 % organic solvent by volume. Preferred organic solvents are alcohols, mixtures of alcohols, ketones, mixtures of ketones, mixtures of alcohol and ketone and mixtures of alcohols and ketones. Preferred alcohols are ethanol, methanol or isopropanol. Preferred ketones are acetone and methyl ethyl ketone (MEK). In a preferred embodiment, the organic solvent is mixed into the solution in a ratio of between 5 % and 25 % of organic solvent to between 95 % and 75 % of water by volume. The portion of organic solvent is added to the solution of water and lithium salt in order to increase the solubility of the polyether polymer in the solution to be added in the third step of the process shown in FIG. 3. The organic solvent has the effect of increasing the Low Critical Solubility Temperature (LCST) of the polymer thereby improving the ease of mixing and processing the constituents of the electrode and the resulting electrode slurry.

Thereafter, a polyether polymer or copolymer capable of solvating a lithium salt, preferably a polyethylene oxide polymer or co-polymer is introduced into the water-based solution including the organic solvent and the lithium salt. Polyethylene oxide is one example of a polyether polymer capable of solvating lithium salt such that when the solvents are removed at the end of the process, the polyethylene oxide matrix with the LiTFSI salt dissolved therein serves as the electrolyte component of the electrode. Once dried, the solid electrolyte serves as binder for the electrochemically active materials of the electrode and ensures ionic transport through the electrode. The new interim water-based solution including the lithium salt and polyethylene oxide is mechanically mixed until a homogeneous solution is obtained.

The polyether polymer may be cross-linkable and a cross-linking additive may be used as described above in order to increase the dimensional stability of the formed electrode. The cross-linking additive is selected from the additives enumerated above relative to FIG. 1. Cross-linking of the polymer matrix is carried out thermally, by UV radiation or with an electron beam (EB).

To prevent foaming, an antifoaming agent (silicone based or non-silicone based) may be added as described above and the mixing process may be carried out under vacuum in order to limit air contact with the solution during mixing.

Thereafter, the electrochemically active material and, if required an electronically conductive additive, is introduced into the water-based solution now including the solvent mix, the lithium salt and the polyethylene oxide, and the new mixture is mechanically mixed under vacuum until a homogeneous degassed final water-based solution/suspension in the form of a slurry is obtained. The electrochemically active materials used are described above with reference to Fig. 1.

In general terms, the slurry mixture contains by weight at least 40% solvent mix, at least 20% electrochemically active material, up to 10% electrically conductive material if required, at least 5 % polyether polymer or copolymer, and at least 1.5 % lithium salt.

After mixing (under vacuum and/or with antifoaming agent added), a homogeneous electrode slurry is obtained which is ready to be formed into a thin film. The homogeneous slurry is preferably spread or coated directly onto a current collector substrate. An aluminium based current collector substrate is typically used for the positive electrode and a copper based current collector substrate is typically used for the negative electrode. The spreading or coating of the homogeneous slurry is preferably carried out via Doctor blade, reverse roll, gravure roll, curtain, slide die, or slot die processes. The slurry may also be heated prior to coating to reduce its viscosity. The coated electrode thin film preferably has a thickness of less than 100*µ*m and preferably less than 70 *µ*m.

Thereafter, the current collector substrate coated with the electrode slurry is carried through a dryer/oven to remove the water and organic solvent from the coated electrode slurry as described relative to FIG.1 in order to form an electrode sheet.

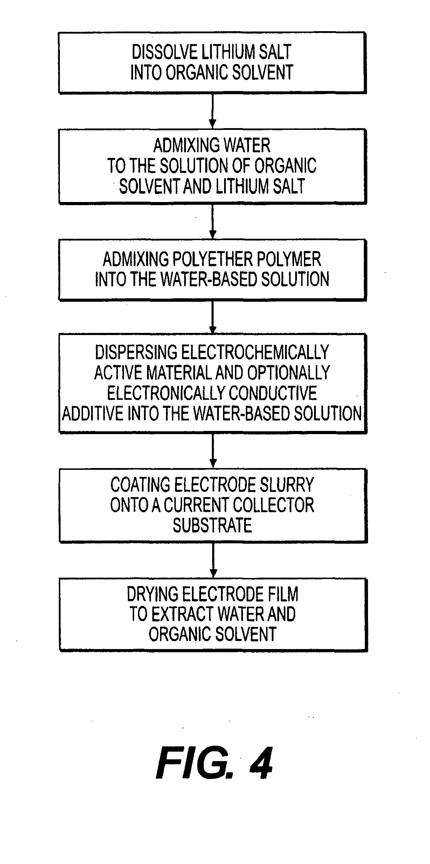

FIG. 4 is a flowchart illustrating a process for preparing an electrode thin sheet in accordance with a fourth embodiment of the present invention. First, a lithium salt is dissolved into an organic solvent which miscible with water. Preferred organic solvents are alcohols, mixtures of alcohols, ketones, mixtures of ketones, mixtures of alcohol and ketone and mixtures of alcohols and ketones. Preferred alcohols are ethanol, methanol or isopropanol. Preferred ketones are acetone and methyl ethyl ketone (MEK). The lithium salt is dissolved in the organic solvent using a standard mechanical mixer to ensure complete dissolution of the lithium salt in the organic solvent. The amount of organic solvent required is as much as necessary to dissolve the lithium salt completely. Since the organic solvent will be evaporated at the end of the process, there is no restriction on the amount of organic solvent used however, for economical reason related to the efficiency of the later drying process and to limit the amount of organic solvent evaporated to a minimum to avoid environmental contamination and the recovery process that it may entail, it is better to reduce the amount of organic solvent to the minimum.

Subsequently, water, preferably distilled, purified or deionised, is mixed with the solution of organic solvent and lithium salt in a ratio of a minimum of 50% water by volume. In a preferred embodiment, water is mixed into the solution in a ratio of between 75% and 95% of water to between 25% and 5% organic solvent by volume. The portion of organic solvent in the solution increases the solubility of the polyether polymer in the solution to be added in the third step of the process shown in FIG. 4. The organic solvent has the effect of increasing the Low Critical Solubility Temperature (LCST) of the polymer thereby improving the ease of mixing and processing the constituents of the electrode and the resulting electrode slurry.

Thereafter, a polyether polymer or copolymer capable of solvating a lithium salt, preferably a polyethylene oxide polymer or co-polymer is introduced into the water-based solution including water, organic solvent and lithium salt. Polyethylene oxide is one example of a polyether polymer capable of solvating lithium salt such that when the solvents are removed at the end of the process, the polyethylene oxide matrix with the lithium salt dissolved therein serves as the electrolyte component of the electrode. Once dried, the solid electrolyte serves as binder for the electrochemically active materials of the electrode and ensures ionic transport through the electrode. The new interim water-based solution including the lithium salt and polyethylene oxide is mechanically mixed until a homogeneous solution is obtained.

The polyether polymer may be cross-linkable and a cross-linking additive may be used as described above in order to increase the dimensional stability of the formed electrode. The cross-linking additive is selected from the additives enumerated above relative to FIG. 1. Cross-linking of the polymer matrix is carried out thermally, by UV radiation or with an electron beam (EB).

To prevent foaming, an antifoaming agent (silicone based or non-silicone based) may be added as described above and the mixing process may be carried out under vacuum in order to limit air contact with the water-based solution during mixing.

Thereafter, the electrochemically active material and, if required an electronically conductive additive, is introduced into the water-based solution now including the solvent mix, the lithium salt and the polyethylene oxide, and the new mixture is mechanically mixed under vacuum until a homogeneous degassed final water-based solution/suspension in the form of a slurry is obtained. The electrochemically active materials used are described above with reference to Fig. 1.

In general terms, the slurry mixture contains by weight at least 40% solvent (water and organic solvent), at least 20% electrochemically active material, up to 10% electrically conductive material if required, at least 5 % polyether polymer or copolymer, and at least 1.5 % lithium salt.

After mixing (under vacuum and/or with antifoaming agent added), a homogeneous electrode slurry is obtained which is ready to be formed into a thin film. The homogeneous slurry is preferably spread or coated directly onto a current collector substrate. An aluminum based current collector substrate is typically used for the positive electrode and a copper based current collector substrate is typically used for the negative electrode. The spreading or coating of the homogeneous slurry is preferably carried out via Doctor blade, reverse roll, gravure roll, curtain, slide die, or slot die processes. The slurry may also be heated prior to coating to reduce its viscosity. The coated electrode thin film preferably has a thickness of less than 100µm and preferably less than 70 *µ*m.

Thereafter, the current collector substrate coated with the electrode slurry is carried through a dryer/oven to remove the water and organic from the coated electrode slurry as described relative to FIG.1 in order to form an electrode sheet.

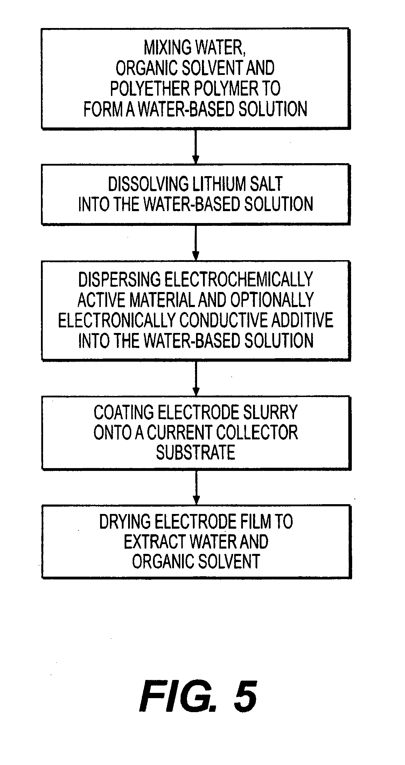

FIG. 5 is a flowchart illustrating a process for preparing an electrode thin sheet in accordance with a fifth embodiment of the present invention. First, water is mixed an organic solvent which is miscible with water, and a polyether polymer or copolymer capable of solvating lithium salt, preferably a polyethylene oxide polymer or co-polymer to form a water-based solution. Preferred organic solvents are enumerated above with reference to Fig. 2. The water and organic solvent are mixed in a ratio of a minimum of 50% water by volume. In a preferred embodiment, the water and organic solvent are mixed in a ratio of between 75% and 95% water to between 25% and 5% organic solvent by volume. The polyether polymer is mixed with water and organic solvent in a ratio of 10% to 20% by weight.

The polyether polymer may be cross-linkable and a cross-linking additive may be used as described above in order to increase the dimensional stability of the formed electrode. The cross-linking additive is selected from the additives enumerated above relative to FIG. 1. Cross-linking of the polymer matrix is carried out thermally, by UV radiation or with an electron beam (EB). The portion of organic solvent in the solution increases the solubility of the polyether polymer in the solution. The organic solvent has the effect of increasing the Low Critical Solubility Temperature (LCST) of the polymer thereby improving the ease of mixing and processing the constituents of the electrode and the resulting electrode slurry.

A lithium salt is dissolved into the water-based solution using a standard mechanical mixer to ensure complete dissolution of the lithium salt in the water-based solution. The amount of organic solvent and water required is as much as necessary to dissolve the lithium salt completely. Since the water and organic solvent will be evaporated at the end of the process, there is no restriction on the amount of organic solvent used however, for economical reason related to the efficiency of the later drying process and to limit the amount of organic solvent evaporated to a minimum to avoid environmental contamination and the recovery process that it may entail, it is better to reduce the amount of organic solvent to the minimum. The new interim water-based solution including the lithium salt is mechanically mixed until a homogeneous solution is obtained.

To prevent foaming, an antifoaming agent (silicone based or non-silicone based) may be added as described above and the mixing process may be carried out under vacuum in order to limit air contact with the solution during mixing.

Thereafter, the electrochemically active material and, if required an electronically conductive additive, is introduced into the water-based solution now including the solvent mix (water and organic solvent), the lithium salt and the polyethylene oxide, and the new mixture is mechanically mixed under vacuum until a homogeneous degassed final water-based solution/suspension in the form of a slurry is obtained. The electrochemically active materials used are described above with reference to Fig. 1.

In general terms, the slurry mixture contains by weight at least 40% solvent (water and organic solvent), at least 20% electrochemically active material, up to 10% electrically conductive material if required, at least 5 % polyether polymer or copolymer, and at least 1.5% lithium salt.

After mixing (under vacuum and/or with antifoaming agent added), a homogeneous electrode slurry is obtained which is ready to be formed into a thin film. The homogeneous slurry is preferably spread or coated directly onto a current collector substrate. An aluminum based current collector substrate is typically used for the positive electrode and a copper based current collector substrate is typically used for the negative electrode. The spreading or coating of the homogeneous slurry is preferably carried out via Doctor blade, reverse roll, gravure roll, curtain, slide die, or slot die processes. The slurry may also be heated prior to coating to reduce its viscosity. The coated electrode thin film preferably has a thickness of less than 100*µ*m and preferably less than 70 *µ*m.

Thereafter, the current collector substrate coated with the electrode slurry is carried through a dryer/oven to remove the water and organic solvent from the coated electrode slurry as described relative to FIG.1 in order to form an electrode sheet.

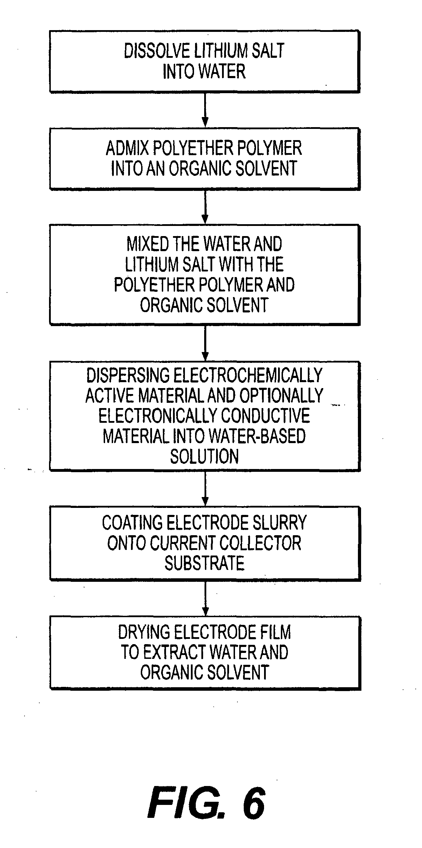

FIG. 6 is a flowchart illustrating a process for preparing an electrode thin sheet in accordance with a sixth embodiment of the present invention. First, a lithium salt is dissolved in water. Separately, a polyether polymer or copolymer capable of solvating lithium salt, preferably a polyethylene oxide polymer or co-polymer is mixed with an organic solvent miscible with water. Preferred organic solvents are enumerated above with reference to Fig. 2. Thereafter, the water solution containing lithium salt is mixed with the organic solvent and polyether polymer using a standard mechanical mixer to form an interim water-based solution. The water and organic solvent are mixed in a ratio of a minimum of 50% water by volume. In a preferred embodiment, water and organic solvent are mixed in a ratio of between 75 % and 95 % of water to between 25 % and 5 % organic solvent by volume. The polyether polymer is mixed with water and organic solvent in a ratio of 10% to 20% by weight.

The polyether polymer may be cross-linkable and a cross-linking additive may be used as described above in order to increase the dimensional stability of the formed electrode. The cross-linking additive is selected from the additives enumerated above relative to FIG. 1. Cross-linking of the polymer matrix is carried out thermally, by UV radiation or with an electron beam (EB).

The portion of organic solvent in the solution increases the solubility of the polyether polymer in the solution. The organic solvent has the effect of increasing the Low Critical Solubility Temperature (LCST) of the polymer thereby improving the ease of mixing and processing the constituents of the electrode and the resulting electrode slurry.

To prevent foaming, an antifoaming agent (silicone based or non-silicone based) may be added as described above and the mixing process may be carried out under vacuum in order to limit air contact with the solution during mixing.

Thereafter, the electrochemically active material and, if required an electronically conductive additive, is introduced into the water-based solution now including the solvent mix (water and organic solvent), the lithium salt and the polyethylene oxide, and the new mixture is mechanically mixed under vacuum until a homogeneous degassed final water-based solution/suspension in the form of a slurry is obtained. The electrochemically active materials used are described above with reference to Fig. 1.

In general terms, the slurry mixture contains by weight at least 40% solvent (water and organic solvent), at least 20% electrochemically active material, up to 10% electrically conductive material if required, at least 5 % polyether polymer or copolymer, and at least 1.5% lithium salt.

After mixing (under vacuum and/or with antifoaming agent added), a homogeneous electrode slurry is obtained which is ready to be formed into a thin film. The homogeneous slurry is preferably spread or coated directly onto a current collector substrate. An aluminum based current collector substrate is typically used for the positive electrode and a copper based current collector substrate is typically used for the negative electrode. The spreading or coating of the homogeneous slurry is preferably carried out via Doctor blade, reverse roll, gravure roll, curtain, slide die, or slot die processes. The slurry may also be heated prior to coating to reduce its viscosity. The coated electrode thin film preferably has a thickness of less than 100*µ*m and preferably less than 70 *µ*m.

Thereafter, the current collector substrate coated with the electrode slurry is carried through a dryer/oven to remove the water and organic solvent from the coated electrode slurry as described relative to FIG.1 in order to form an electrode sheet.

While the invention has been described in connection with what is presently considered to be the most practical and preferred embodiments, it is to be understood that the invention is not to be limited to the disclosed embodiments and elements, but, to the contrary, is intended to cover various modifications, combinations of features, equivalent arrangements, and equivalent elements included within the scope of the appended claims. Furthermore, the dimensions of features of various components that may appear on the drawings are not meant to be limiting, and the size of the components therein can vary from the size that may be portrayed in the figures herein. Thus, it is intended that the present invention covers the modifications and variations of the invention, provided they come within the scope of the appended claims and their equivalents.

## Claims

**1.** (Amended) A process for making an electrode sheet for a lithium electrochemical cells comprising the steps of:
a) admixing a polyether polymer or copolymer soluble in water, at least one lithium salt, at least one electrochemically active material, water and one or more organic solvent miscible with water in a water/organic solvent ratio of a maximum of 50% organic solvent by volume to form a water-based solution/suspension containing by weight at least 40% of water/organic solvent mix; at least 20% electrochemically active material, at least 5% of a polyether polymer or copolymer, and at least 1.5% lithium salt;
b) coating the water-based solution/suspension in the form of an electrode thin film onto an electrode support; and,
c) drying the electrode thin film to obtain an electrode thin sheet having less than 1000 ppm of residual water.

**2.** (Amended) A process for making an electrode sheet as defined in claim 1, further comprising admixing up to 10% by weight electrically conductive material into the water-based solution/suspension.

**3.** A process for making an electrode sheet as defined in claim 1, wherein the water is selected from the group of distilled, purified and deionized water.

**4.** (Amended) A process for making an electrode sheet as defined in claim 1, wherein the water/organic solvent ratio is a maximum of 25% organic solvent by volume.

**5.** (Amended) A process for making an electrode sheet as defined in claim [[4]] 1, wherein the organic solvent is selected from the group consisting of an alcohol, a mixture of alcohols, a ketone, a mixture of ketones, a mixture of alcohol and ketone and a mixture of alcohols and ketones.

**6.** A process for making an electrode sheet as defined in claim 5, wherein the alcohol is selected from the group consisting of ethanol, methanol and isopropanol.

**7.** A process for making an electrode sheet as defined in claim 5, wherein the ketone is selected from the group consisting of acetone and Methyl Ethyl Ketone.

**8.** (Amended) A process for making an electrode sheet as defined in claim [[4]] 1 wherein the one or more organic solvent is first mixed with the water to form an initial water-based solution.

**9.** A process for making an electrode sheet as defined in claim 8 wherein the lithium salt is dissolved in the initial water-based solution.

**10.** A process for making an electrode sheet as defined in claim 9 wherein the polyether polymer or copolymer is admixed into the initial water-based solution to form an interim water-based solution.

**11.** A process for making an electrode sheet as defined in claim 10 wherein the at least one electrochemically active material is admixed into the interim water-based solution to form a final water-based solution/suspension.

**12.** A process for making an electrode sheet as defined in claim 10 wherein an electrically conductive material is admixed into the interim water-based solution.

**13.** A process for making an electrode sheet as defined in claim 1 further comprising the step of admixing an antifoaming agent into the water-based solution/suspension.

**14.** A process for making an electrode sheet as defined in claim 1 wherein the admixing process is carried out under vacuum.

**15.** A process for making an electrode sheet as defined in claim 1 wherein the polyether polymer or copolymer is capable of solvating a lithium salt.

## Patentansprüche

1. Verfahren zur Herstellung eines Elektrodenblatts für elektrochemische Lithiumzellen, umfassend die folgenden Schritte:
a) Beimischen eines Polyetherpolymers oder-copolyers, das im Wasser löslich ist,
mindestens eines Lithiumsalzes, mindestens eines elektrochemisch aktiven Materials, Wassers und eines oder mehrerer organischer Lösemittel, die mit Wasser in einem Verhältnis Wasser/organische Lösemittel von maximal 50 Gew% organischem Lösemittel mischbar sind, um eine wasserbasierte Lösung/Suspension zu bilden, die mindestens 40 Gew% einer Mischung aus Wasser/organischem Lösemittel enthält; mindestens 20 Gew% elektrochemisch aktives Material, mindestens 5 Gew% eines Polyetherpolymers oder -copolymers, und mindestens 1,5 Gew% Lithiumsalz;
b) Beschichten der wasserbasierten Lösung/Suspension in dem oder von einem Elektrodendünnfilm auf einen Elektrodenträger; und,
c) Trocknen des Elektrodendünnfilms, um ein Elektrodendünnblatt mit weniger als 1000 ppm Restwasser zu erhalten.

2. Verfahren zur Herstellung eines Elektrodenblatts nach Ansprach 1, weiter umfassend die Beimischung von bis zu 10 Gew% elektrisch leitfähiges Material in eine wasserbasierte Lösung/Suspension.

3. Verfahren zur Herstellung eines Elektrodenblatts nach Anspruch 1, wobei das Wasser aus der Gruppe von destilliertem, gereinigtem und deionisiertem Wasser ausgewählt wird.

4. Verfahren zur Herstellung eines Elektrodenblatts nach Anspruch 1, wobei das Verhältnis Wasser/organisches Lösemittel maximal 25 Gew% organisches Lösmittel ist.

5. Verfahren zur Herstellung eines Elektrodenblatts nach Ansprach [[4]] 1, wobei das organische Lösemittel ausgewählt wird aus der Gruppe bestehend aus einem Alkohol, einer Mischung aus Alkoholen, einem Keton, einer Mischung von Ketonen, einer Mischung aus Alkohol und Keton und einer Mischung aus Alkoholen und Ketonen.

6. Verfahren zur Herstellung eines Elektrodenblatts nach Ansprach 5, wobei der Alkohol ausgewählt ist aus der Gruppe bestehend aus Ethanol, Methanol und Isopropanol.

7. Verfahren zur Herstellung eines Elektrodenblatts nach Anspruch 5, wobei das Keton ausgewählt wird aus der Gruppe bestehend aus Aceton und Methylethylketon.

8. Verfahren zur Herstellung eines Elektrodenblatts nach Anspruch [[4]] 1, wobei das eine oder die mehreren organischen Lösemittel, zuerst mit Wasser gemischt werden, um eine anfängliche wasserbasierte Lösung zu bilden.

9. Verfahren zur Herstellung eines Elektrodenblatts nach Ansprach 8, wobei das Lithiumsalz in der anfänglichen wasserbasierten Lösung gelöst ist.

10. Verfahren zur Herstellung eines Elektrodenblatts nach Ansprach 9, wobei das Polyetherpolymer oder -copolymer in die anfängliche wasserbasierte Lösung beigemischt wird, um eine Interims-wasserbasierte Lösung zu bilden.

11. Verfahren zur Herstellung einer Elektrodenschicht nach Ansprach 10, wobei das mindestens eine elektrochemisch aktive Material der Interims-wasserbasierten Lösung beigemischt wird, um eine endgültige wasserbasierte Lösung/Suspension zu bilden.

12. Verfahren zur Herstellung eines Elektrodenblatts nach Ansprach 10, wobei ein elektrisch leitfähiges Material der Interims-wasserbasierten Lösung beigemischt wird.

13. Verfahren zur Herstellung eines Elektrodenblatts nach Anspruch 1, weiter umfassend den Schritt des Beimischens eines Antischaummittels in die wasserbasierte Lösung/Suspension.

14. Verfahren zur Herstellung eines Elektrodenblatts nach Ansprach 1, wobei das Beimischungsverfahren unter Vakuum durchgeführt wird.

15. Verfahren zur Herstellung eines Elektrodenblatts nach Ansprach 1, wobei das Polyetherpolymer oder -copolymer dazu in der Lage ist, ein Lithiumsalz zu solvatisieren.

## Revendications

1. Procédé de fabrication d'une feuille d'électrode pour des piles électrochimiques au lithium comprenant les étapes de :
a) mélange d'un polymère ou copolymère de poly(éther) soluble dans l'eau, d'au moins un sel de lithium, d'au moins un matériau électrochimiquement actif, d'eau et d'un ou plusieurs solvants organiques miscibles à l'eau dans un rapport eau/solvant organique au maximum de 50 % de solvant organique en volume pour former une solution/suspension à base d'eau contenant en poids au moins 40 % de mélange eau/solvant organique ; au moins 20 % de matériau électrochimiquement actif, au moins 5 % d'un polymère ou copolymère de poly(éther), et au moins 1,5 % de sel de lithium ;
b) revêtement de la solution/suspension à base d'eau sous la forme d'un film fin d'électrode sur un support d'électrode ; et
c) séchage du film fin d'électrode pour obtenir une fine feuille d'électrode ayant moins de 1 000 ppm d'eau résiduelle.

2. Procédé de fabrication d'une feuille d'électrode selon la revendication 1, comprenant en outre le mélange de jusqu'à 10 % en poids de matériau électriquement conducteur dans la solution/suspension à base d'eau.

3. Procédé de fabrication d'une feuille d'électrode selon la revendication 1, dans lequel l'eau est choisie dans le groupe comprenant l'eau distillée, purifiée et désionisée.

4. Procédé de fabrication d'une feuille d'électrode selon la revendication 1, dans lequel le rapport eau/solvant organique est au maximum de 25 % de solvant organique en volume.

5. Procédé de fabrication d'une feuille d'électrode selon la revendication 1, dans lequel le solvant organique est choisi dans le groupe constitué d'un alcool, d'un mélange d'alcools, d'une cétone, d'un mélange de cétones, d'un mélange d'alcool et de cétone et d'un mélange d'alcools et de cétones.

6. Procédé de fabrication d'une feuille d'électrode selon la revendication 5, dans lequel l'alcool est choisi dans le groupe constitué de l'éthanol, du méthanol et de l'isopropanol.

7. Procédé de fabrication d'une feuille d'électrode selon la revendication 5, dans lequel la cétone est choisie dans le groupe constitué de l'acétone et de la méthyléthylcétone.

8. Procédé de fabrication d'une feuille d'électrode selon la revendication 1, dans lequel les un ou plusieurs solvants organiques sont tout d'abord mélangés avec l'eau pour former une solution initiale à base d'eau.

9. Procédé de fabrication d'une feuille d'électrode selon la revendication 8, dans lequel le sel de lithium est dissous dans la solution initiale à base d'eau.

10. Procédé de fabrication d'une feuille d'électrode selon la revendication 9, dans lequel le polymère ou copolymère de poly(éther) est mélangé dans la solution initiale à base d'eau pour former une solution intermédiaire à base d'eau.

11. Procédé de fabrication d'une feuille d'électrode selon la revendication 10, dans lequel le au moins un matériau électrochimiquement actif est mélangé dans la solution intermédiaire à base d'eau pour former une solution/suspension finale à base d'eau.

12. Procédé de fabrication d'une feuille d'électrode selon la revendication 10, dans lequel un matériau électriquement conducteur est mélangé dans la solution intermédiaire à base d'eau.

13. Procédé de fabrication d'une feuille d'électrode selon la revendication 1, comprenant en outre l'étape de mélange d'un agent antimoussant dans la solution/suspension à base d'eau.

14. Procédé de fabrication d'une feuille d'électrode selon la revendication 1, dans lequel le procédé de mélange est réalisé sous vide.

15. Procédé de fabrication d'une feuille d'électrode selon la revendication 1, dans lequel le polymère ou copolymère de poly(éther) est capable de solvater un sel de lithium.
